# EUROPEAN PATENT SPECIFICATION

(11) **EP 1 698 817 B1**
(45) Date of publication and mention of the grant of the patent: **21.08.2013**
(21) Application number: 06004489.8
(22) Date of filing: 06.03.2006
(51) Int. Cl.: H01F 7/16, H01F 7/18, F16K 7/14, F16K 31/08, F16K 31/06

(54) **Electromagnetic apparatus and method for controlling fluid flow**
Elektromagnetische Vorrichtung und Verfahren zur Steuerung einer Strömung
Appareil électromagnétique et procédé de régulation d'un fluide

(30) Priority: 05.03.2005 US 659343 P
(43) Date of publication of application: 06.09.2006
(73) Proprietor: Sloan Valve Company, Franklin Park, IL 60131 (US)
(72) Inventor: Herbert, Kay, Winthrop, MA 02152 (US); Parsons, Natan E., Brookline, MA 02146 (US); Mo, Xiaoxiong, Lexington, MA 02420 (US); Guler, Fatih, Winchester, MA 01890 (US)
(74) Representative: Wagner, Karl H.

(56) References cited:
- EP-A1- 1 387 116
- WO-A-02/068850
- DE-A1- 10 324 091
- US-A- 4 779 582
- US-A- 5 265 843

## Description

### BACKGROUND OF THE INVENTION

This application also claims priority from U.S. provisional Application 60/659,343 filed on March 5, 2005.

### Field of the Invention

The present invention relates to controlling fluid flow in various systems and more specifically to electromagnetic actuators.

### Background Information

Industrial, agricultural and household systems use various types of valves for controlling fluid flow. The most common form of electrically operated valve employs a solenoid wound onto a bobbin, and a valve member located inside the bobbin and driven by a drive current passed through the solenoid. In a closed position, a tip of the valve member (armature) is pressed against a valve seat and thereby stops flow through a conduit in which the valve seat is located. The tip of the valve member is in many cases made of a synthetic resin, or other resilient material, other parts of the valve member are made up of a material having relatively high magnetic permeability, such as steel, so that it will be subject to force from the solenoid's magnetic field and will act as a solenoid armature.

In battery-operated actuators, electric valve-control circuitry should employ as little power as possible. To achieve highly energy efficient operation, the valve member (i.e., the solenoid's armature) needs to be as magnetically permeable as possible. Furthermore, the electric-valve control circuitry should apply only the minimum drive current necessary for the minimum duration during the armature activation for latching valves (i.e., valves whose actuators require power to open or close the valve but not to keep it opened or closed).

US Patent 4779582 discloses a bistable electromechanical valve actuator. The valve actuator includes a valve member latched into open or closed positions by permanent magnetic poles against the force of compressed springs. The valve actuator also includes a coil associated with each position, wherein the coil when activated with a current, cancels the magnetic field of the permanent magnetic pole holding the valve member and allows the compressed spring to move the member quickly through a central neutral position toward the other position, whereupon it is attracted by the other magnetic pole to compress the other spring and latch into the other position. Variations on the basic invention include different structures for single valves, the inclusion of two valves within a single pair of coils with different opening current levels, and the use of the coil opposite the activating coil as a valve member movement sensing device.

There is still a need for an improved electromagnetic actuator.

### SUMMARY OF THE INVENTION

The present invention relates to an electromagnetic valve system according to claim 1, respectively a method of controlling a valve passage, according to claim 19.

According to the invention, an electromagnetic actuator comprises a solenoid coil, an armature housing, a radial magnet and a ferromagnetic armature inside an armature chamber. The electromagnetic actuator also includes a membrane arranged to at least partially enclose a distal part of the armature to seal armature fluid inside the armature chamber. A linear displacement of the armature, caused by a coil drive current applied to the solenoid coil, displaces the distal part and thus the membrane with respect to a valve passage controlled by the actuator. The radial magnet is magnetically coupled to a magnetic circuit arranged to maintain the ferromagnetic armature in a selected position.

The radial magnet may be constructed and arranged to maintain the armature stationary, by a force of the magnetic field, in a closed state having said distal part of the armature extended. The armature housing and the armature may be constructed to provide a magnetic circuit for a magnetic flux that creates a force maintaining the armature in the extended position and thereby maintaining a valve passage in a closed position. The armature housing and the armature may be constructed to provide a magnetic circuit for a magnetic flux that creates a force maintaining the armature in the retracted position and thereby maintaining a valve passage in an opened position. The magnetic circuit and the magnetic flux path may include the armature, the actuator's housing, and other parts. The magnetic circuit and the magnetic flux path can be varied in a controllable manner. The radial magnet may include a single ring-like member, two or more semicircular members, or several discrete magnets located inside the armature housing and positioned radially with respect to the ferromagnetic armature.

The actuator may include an armature sensor. The armature sensor may be a piezoelectric transducer. The piezoelectric transducer may be secured to an external housing of the actuator. Alternatively, the armature sensor may include a capacitive sensor, an optical sensor, or a detector of electromagnetic radiation. The detector of electromagnetic radiation may include a wire loop.

The above actuators are operable by driving electric current through the solenoid coil to drive the armature between retracted and extended armature positions. The actuator may include a flexible membrane secured at the mouth of the pocket so as to deform outward when the armature travels to its extended position. The membrane helps form, with the housing, a substantially fluid-tight armature chamber that contains the armature.

According to yet another aspect, the electromagnetic valve system includes an actuator including an actuator housing, an armature located within an armature chamber a radial magnet, an armature sensor and a coil operable by application of a coil drive provided from a control circuit. The control circuit may include a microcontroller. The control circuit is constructed to provide the coil drive in the first drive direction to conduct current in a first current direction intended to drive the armature to a first end position. The control circuit is constructed to begin applying coil drive to a coil in the first direction and to be responsive to the sensor output meeting a predetermined first current-termination criterion to stop applying this coil drive to the coil in the first drive direction. This use of the armature sensor reduces the energy waste that usually occurs in driving the actuator's armature.

The control circuit, including the microcontroller, may be operatively connected to an external object sensor. The external object sensor may be a motion sensor. The external object sensor may be a presence sensor. The external object sensor may include an ultrasonic sensor or a capacitive sensor. The external object sensor may include an active optical sensor, or a passive optical sensor.

The armature sensor may monitor the armature movement or determine when the armature has reached the end of its travel. At a selected point, based on the signal from the armature sensor, a drive signal to the actuator coil drive ends. This can reduce energy consumption greatly, because coil-drive duration does not always need to be long enough to meet worst-case requirements, which are usually applied to assure opening or closing when there is no armature sensor. This reduction of energy use results in a significant battery-longevity increase. Further, a sensor can check if the actuator is functioning properly, and aid in monitoring the condition of the actuator in question. These measurements show the state of the condition of the valve. Once the armature reaches the end position and makes a sound, for example, the sensor generates a sensor output indicative of the sound sensed. The sound sensor may be such as described in US Patents 6,450,476; 6,305,662; 6,293,516. Other signals indicative of the armature position may be used.

If the actuator includes the membrane, a substantially incompressible armature fluid may occupy the entire volume not occupied by the armature inside the armature chamber (armature pocket). The incompressible fluid may include a corrosion inhibitor, e.g., essentially of water mixed with a corrosion inhibitor. The incompressible fluid may include a liquid having relatively large molecules.

For example, the armature liquid may be water mixed with a 20% mixture of polypropylene glycol and potassium phosphate. Alternatively, the armature fluid may include silicon-based fluid, polypropylene polyethylene glycol or another fluid having a large molecule. The armature material may be a low-carbon steel due to the non-corrosive properties of the armature fluid. Other embodiments may employ armature materials such as the 420 or 430 series stainless steels or another essentially ferromagnetic material (i.e., armature material that the solenoid and magnet can attract).

Advantageously, the use of the membrane enables the use of armature materials with a high magnetic permeability such as the ferromagnetic types of carbon steel or stainless steel regardless of their low corrosion resistance, and the armature does not need to be subjected to a number of treatment steps to afford an acceptable level of corrosion resistance. Furthermore, the present design reduces the solenoid-wire size currently required because of a regular armature's non-optimal magnetic permeability. When the actuator includes a flexible membrane secured over the end of the pocket in which the armature travels, the armature's high-permeability material is not exposed to the possibly corrosive fluid whose flow the valve is to control. The armature pocket is filled with an incompressible fluid so as to counterbalance the force exerted by the controlled fluid's pressure. The flexible membrane also protects the valve assembly from contaminants present in the fluids flowing in and controlled by the valve assembly.

### BRIEF DESCRIPTION OF THE DRAWING

Fig. 1 is a perspective view of an electromagnetic actuator constructed and arranged for controlling fluid flow through a valve.
Fig. 2 is a cross-sectional view of the electromagnetic actuator of Fig. 1 including the valve.
Fig. 3 is an exploded view of the electromagnetic actuator for controlling a valve.
Fig. 3A is a cross-sectional view of the armature shown in Figs. 2 and 3.
Fig. 3B is a cross-sectional view of the rear pole piece shown in Figs. 2 and 3.
Fig. 3C is a cross-sectional view and a side view of the bobbin shown in Figs. 2 and 3.
Fig. 3D is a front view of the coil stop shown in Figs. 2 and 3.
Fig. 3E is a front view of the radial magnet used by the actuator shown in Fig. 2 and 4.
Fig. 3F is a cross-sectional side view of the housing shown in Figs. 2 and 3.
Fig. 4 is a cross-sectional view of a second embodiment of the electromagnetic actuator.
Fig. 4A is a cross-sectional view of a third embodiment of the electromagnetic actuator.
Fig. 4B is a cross-sectional view of a fourth embodiment of the electromagnetic actuator
Fig. 4C is a cross-sectional view of a fifth embodiment of the electromagnetic actuator.
Fig. 5 and Fig. 5A schematically illustrate control electronics for controlling the electromagnetic actuator.

### DETAILED DESCRIPTION OF ILLUSTRATIVE EMBODIMENTS

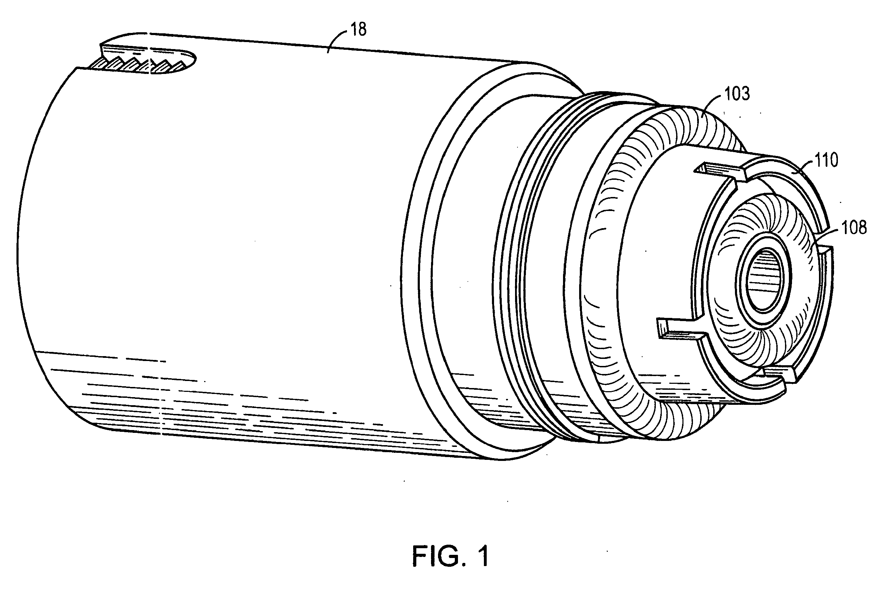

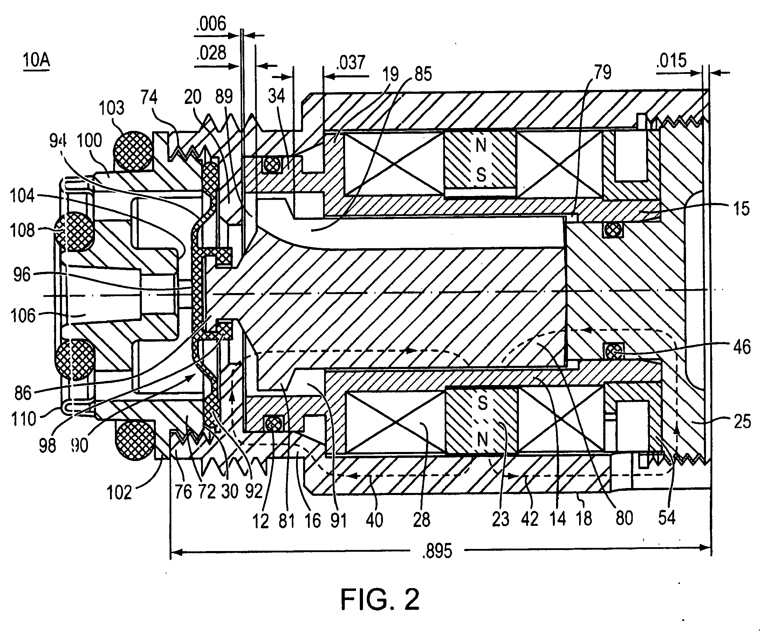

Figs. 1 and 2 show an electrically operable electromagnetic valve used in industrial, agricultural and household systems for controlling fluid flow. The valve includes an electromagnetic actuator 10A, which opens and closes a flow passage inside a pilot body member 100. Electromagnetic actuator 10A uses electromagnetic field to displace an armature located inside the actuator longitudinally to and away from the valve seat. Electromagnetic actuator 10A also uses a magnetic field from a radial magnet arranged to hold the armature at the valve seat in an extended position, or away from the valve seat in a retracted position, without any current being applied to the actuator.

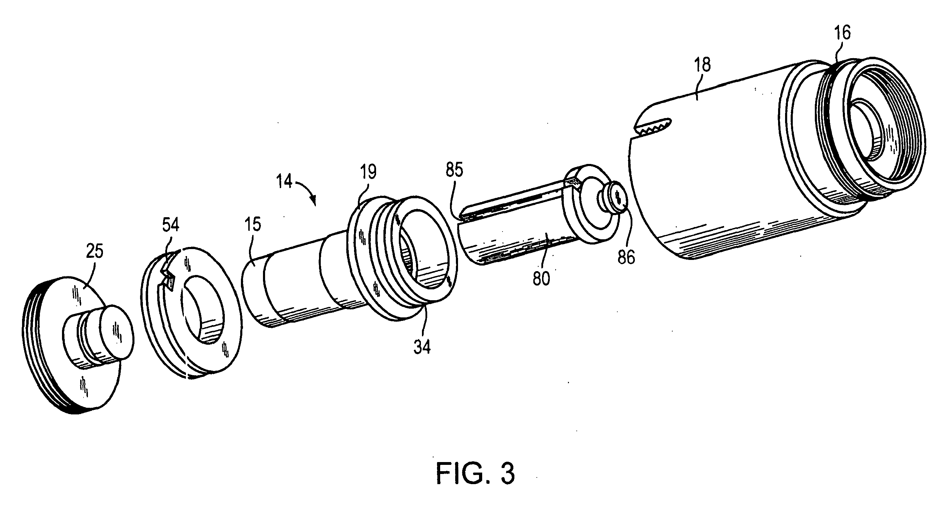

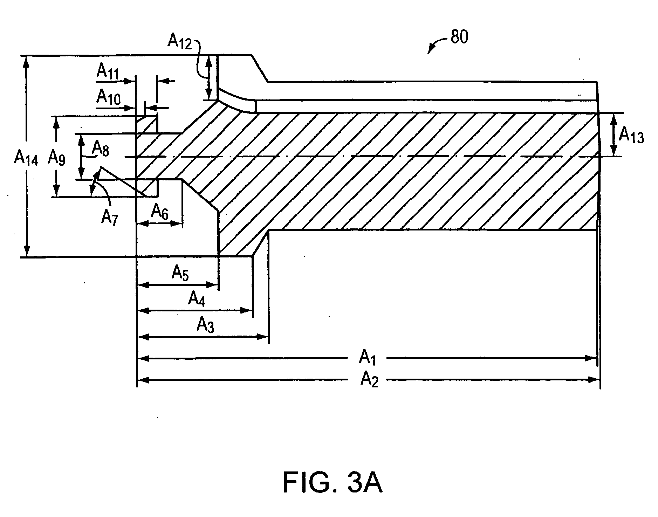

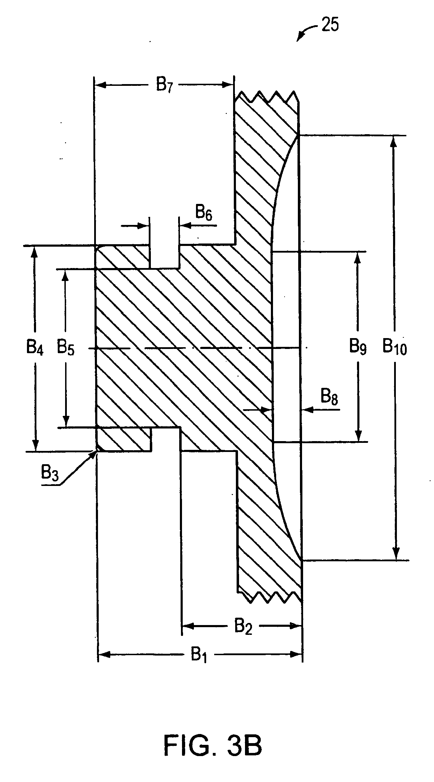

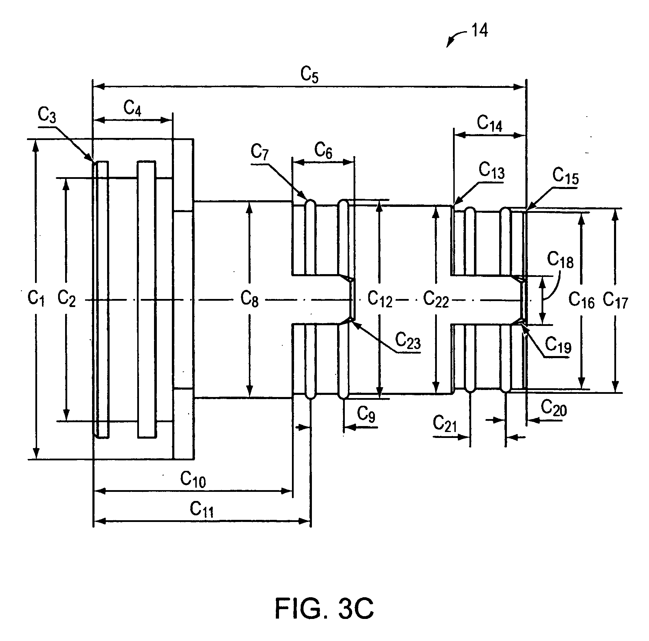

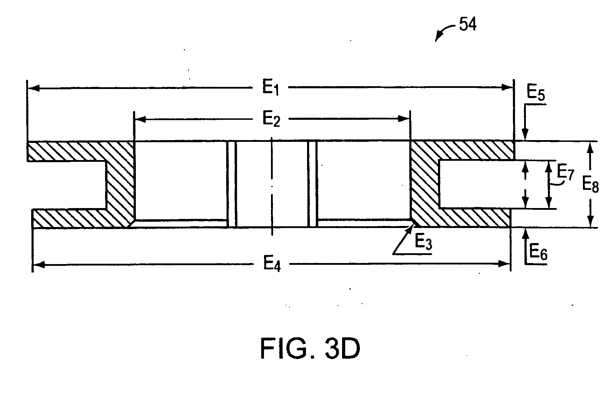

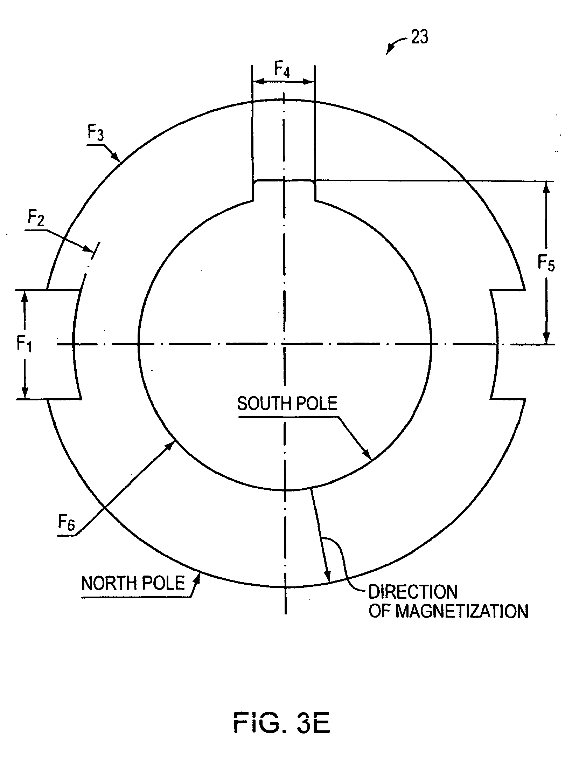

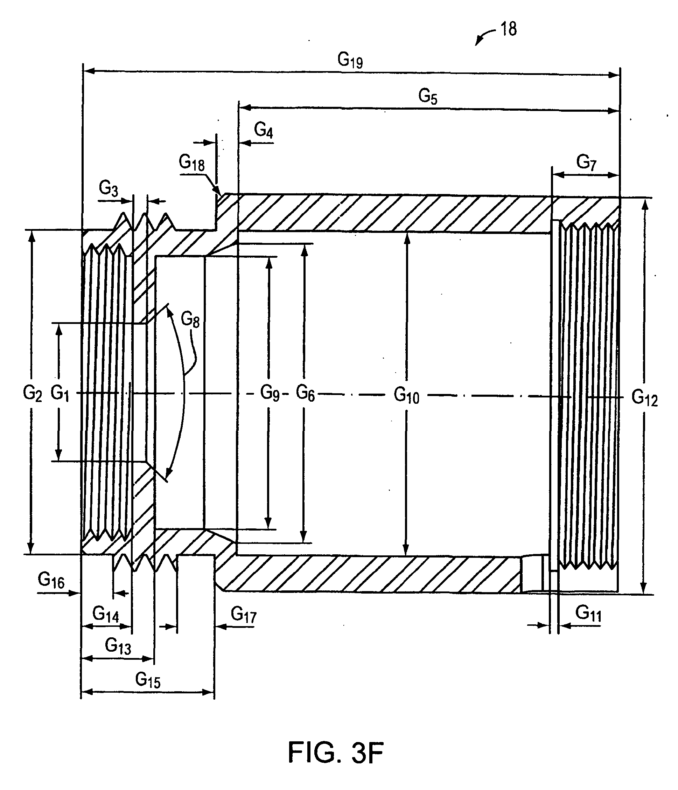

Referring to Figs. 2 and 3, electromagnetic actuator 10A includes a bobbin 14, a cylindrical housing 18, a rear pole piece 25, a coil stop 54, and an armature 80. Armature 80 is located inside the cavity of bobbin 14, which is located inside cylindrical housing 18. A solenoid coil (i.e., windings) 28 is wound around bobbin 14, having a radial magnet 23 located approximately in the middle of the coil and outside of bobbin 14. Armature 80 includes a fluid passage 85 and a plunger tip 86. Rear pole piece 25 holds in place coils stop 54 thereby securing windings 28 and magnet 23 on bobbin 14 and within housing 18. Cylindrical housing 18, which forms the actuator body, includes a threaded base 16 and a shelf 20 (i.e., a flange 20).

The valve also includes a resilient membrane 90 located between flange 20 and a replaceable pilot body member 100, wherein pilot body member 100 defines the valve geometry. Resilient membrane 90 includes a thickened peripheral rim 92, a flexible portion 94, a C-shaped portion 98, surrounding the plunger tip 86, and a deformable sealing part 96. The entire armature 80 is surrounded by a non-corrosive, incompressible fluid located in the armature chamber (i.e., armature pocket). Actuator 10A includes a resiliently deformable O-ring 12 that forms a seal between bobbin 14 and solenoid housing 18, and a resiliently deformable O-ring 46 that forms a seal between bobbin 14 at rear end 15 and rear pole piece 25.

Referring still to Fig. 2, the outer surface of pilot body member 100, by its outer threads 72, engages complementary threads 74 provided at front base 76 of housing 18. An annular surface formed by flange 20 in base 16's lower part squeezes peripheral rim 92 of resiliently deformable membrane 90 against shoulder 30 formed by the rear surface of pilot body member 100. Pilot body member 100 includes a valve seat 104 and conduits 105 and 106. Radial magnet 23 has its south pole facing inward, and its north pole facing outward. The magnet is annular to prevent the armature's attraction to one side or another of the bobbin, therefore keeping it centered within the bobbin so it can move smoothly in a linear direction within bobbin 14.

The valve is opened or closed by applying a drive current to solenoid coil 28. To close the valve, the drive voltage's polarity is applied such that the resultant magnetic flux from coil 28 displaces armature 80 toward pilot body member 100. in the closed state, the armature tip (plunger tip 86) is in the extended position and presses sealing part 96 of membrane 90 onto valve seat 104, closing conduit 106 and thereby stopping flow through conduits 105 and 106. To open the valve, the drive voltage's polarity is in the opposite direction to displace armature 80 away from pilot body member 100. In the opened state, armature tip 86 is in the retracted position, where sealing part 96 is located away from valve seat 104, thereby opening conduit 106 and allowing fluid flow through conduits 105 and 106.

In the open or closed positions, radial magnet 23 provides the magnetic force necessary to keep armature 80 stationary. Radial magnet 23 provides magnetic flux paths 40 and 42 acting on linearly movable armature 80 made of a magnetically soft material. Flux path 40 extends from magnet 23 along and through cylindrical housing 18, through flange 20 and across the front gap to shoulder 81 of armature 80. Flux path 40 then extends along armature 80 through bobbin 14 back to magnet 23. On the other hand, flux path 42 extends from magnet 23 along and through cylindrical housing 18, through rear pole piece 25 and across the rear gap to armature 80, and then extends along armature 80 and through bobbin 14 back to magnet 23, as shown in Fig. 2.

Armature 80 is held in position without the application of the drive current (i.e., held in the latched or unlatched position at zero drive current) using the magnetic circuit provided by radial magnet 23. The magnetic circuits depend on two gaps created by the linear displacement of armature 80. Specifically, inside the armature cavity, there is a front gap located between flange 20 (i.e., shelf 20) and an armature shoulder 81 of armature 80. There is also a rear gap located between the rear of armature 80 and rear pole piece 25, near a rear chamber 79. After the coil drive linearly displaces armature 80 into the extended position, resilient membrane 90 presses against closure surface 104. In this extended position, the front gap is much smaller that the rear gap, and therefore the force along flux path 40 is larger than the force along flux path 42. Due to this force difference, armature 80 is held in the extended position without any drive current. That is, plunger 86 is held in the closed position solely by the magnetic force of radial magnet 23. Subsequent application of the opposite coil drive overcomes the net magnetic force and displaces armature 80 linearly to the retracted position. In the retracted position, the front gap between flange 20 and shoulder 81 is much larger that the rear gap. Since the rear gap is smaller than the front gap, the force along flux path 42 is larger than the force along flux path 40. Therefore armature 80 is held in the retracted position without any drive current flowing in coil 28. The excursion of armature 80, and thus the sizes of the front gap and the rear gap can be controlled by the position of rear pole piece 25, which can be screwed or unscrewed with respect to solenoid housing 18. Therefore, the net magnetic force provided by radial magnet 23 is adjustable by rear pole piece 25.

Referring still to Fig. 2, resiliently deformable O-ring 12 forms a seal between solenoid bobbin 14 and housing 18. This creates a fluid-tight seal, so that membrane 90 protects armature 80 from exposure to fluid flowing through fluid conduit 106 in pilot member 100. Membrane 90 also cooperates with an O-ring seal 46 (at pole piece 25) to form a fluid-tight armature chamber pocket (including chambers 79, 91 and 89) filled with a chamber fluid (i.e., liquid or gas) that preferably is relatively inviscid, incompressible and non-corrosive. The liquid should have a large molecule, so that it is less predisposed to diffuse through membrane 90.

Resilient membrane 90 encloses the armature fluid located within the fluid-tight armature chamber, as described above. Resiliently deformable membrane 90 includes outer ring 92, a compliant region 94, resilient region 96, and a C-shaped region 98 cupping plunger tip 86. In general, deformable membrane 90 and region 98 may have various shapes and sizes, depending on the arrangement and size of pilot body member 100 and armature 80's plunger tip 86. Resilient membrane 90 is exposed to the fluid pressure of the regulated fluid in conduit 106 and may therefore be subject to considerable external force. However, in the closed state, armature 80 does not have to overcome this force, because conduit 106's pressure is transmitted through membrane 90 to the incompressible armature fluid within the armature chamber (i.e., armature pocket). The force that results from the pressure within the armature chamber therefore approximately balances the force that the external conduit pressure exerts.

In the illustrated embodiment, armature tip portion 86 (i.e., plunger tip 86) presses onto the surface of membrane 90, which in turn comes in contact with seat 104 to close flow in conduits 105 and 106 and thus close the valve. Plunger tip 86 may have a circular, elliptical, rectangular or other cross-section. Plunger tip 86's surface is related to the seat opening area, both of which can be increased or decreased. The plunger surface and the seat 104's surface can be optimized for a pressure range at which the valve actuator is designed to operate. Reducing the plunger surface (i.e., narrowing tip portion 86) reduces the plunger area involved in squeezing membrane 90 against seat 104, and this in turn reduces the force required to counter a given upstream fluid-conduit pressure. On the other hand, making the plunger tip area too small tends to damage membrane 90 during valve closing over time. An optimum range of tip-contact area to seat-opening area is between 1.4 and 12.3. The present actuator is suitable for a variety of pressures of the controlled fluid, including pressures of about 10.34 bars (150 psi). Without any substantial modification, the valve actuator may be used in the range of about 2 Bars to 5.52 Bars (30 psi to 80 psi), or even water pressures of about 8.62 Bars (125 psi) .

Furthermore, flexible membrane 90 protects armature 80 located within an armature cavity that is filled with a sufficiently non-corrosive liquid, and this, in turn, enables actuator designers to make more favorable choices between materials with high corrosion resistance and high magnetic permeability of the armature. Furthermore, membrane 90 provides a barrier to metal ions and other debris that would tend to migrate into the armature cavity from water (or other fluids whose flow is being controlled), which is advantageous, especially if such debris is made of a magnetic material.

Referring still to Fig. 2, armature 80 is free to move with respect to fluid pressures within chamber 91 between the retracted and extended positions, which is further facilitated by a fluid passage 85. Passage 85 may be in form of a slot extending along the entire length of armature 80. Inside the bobbin cavity, chambers 89 and 91 are in communication with fluid passage 85 to enable the force-balancing fluid displaced from front well chamber 89 through passage 85 a rear well chamber 79, and vice versa upon displacement of armature 80. Although armature fluid can also flow around the armature's perimeter, arrangements in which rapid armature motion is required need a relatively low-flow resistance path provided by passage 85. Similar considerations favor use of a chamber liquid that has a relatively low viscosity. The low-resistance path and low viscosity enable rapid linear movement of armature 80 at low electrical power.

For example, the armature liquid may be water mixed with a corrosion inhibitor, e.g., a 20% mixture of polypropylene glycol and potassium phosphate. Alternatively, the armature fluid may include silicon-based fluid, polypropylene polyethylene glycol or another fluid having a large molecule to prevent leakage. The chamber liquid may in general be any substantially incompressible liquid having low viscosity and non-corrosive properties with respect to the armature. Because of this corrosion protection, the illustrated embodiment's plunger material can be made from low-carbon steel, or other materials susceptible to corrosion. Other embodiments may employ materials such as the 420 or 430 series stainless steels. It is only necessary that the armature consist essentially of a ferromagnetic material, i.e., a material that the solenoid and magnet can attract. Even so, it may include parts, such as, say, a flexible tip, that are not ferromagnetic.

Deformable membrane 90 is made of a durable material and may at least partially be made of an elastic material. Membrane 90 may be an EPDM diaphragm or another type of diaphragm. Furthermore, the material of deformable membrane 90 is selected to resist possible degradation caused by fluid regulated by valve 10A. Therefore, the same valve actuator can be fabricated for various industrial, agricultural, or other applications, with only deformable membrane 90 and pilot body member 100 specifically designed for the regulated fluid. In medical applications, membrane 90 and pilot member 100 (including O-rings 103 and 108) may be made of material resilient to sterilization, or may be made of a disposable material. Therefore, the valve actuator may be reused after being sterilized, or with new disposable elements.

In general, during field maintenance or replacement, the valve actuator or other elements may be removed or replaced, which may cause a change in the distance and geometry between valve seat 104 and the plunger tip 86 (or resilient region 96) of the valve actuator. Furthermore, various piece-part tolerances and O-ring deformability may result in some variability in the position of valve seat 104 with respect to C-shaped region 98 of membrane 90. This variability can cause resultant inconsistency in the valve operation during the open and close times, but such problems are eliminated by the use of pilot body member 100. The use of different pilot members 100 enables controlled changes (design changes) in the pilot-valve, seat spacing, and geometry when different pilot members 100 are preassembled onto the valve operator, as shown in Fig. 2. This increases the versatility of the valve.

The use of pilot body member 100 is a novel improvement of the operation of diaphragm-controlled flush valves, such as those disclosed in U.S. Patents 5,125,621; 5,195,720; 5,196,118; 5,244,179; or U.S. Patent Publication US2004/0164261. Furthermore, several diaphragms may be cascaded together, wherein passages of pilot body member 100 are connected to a first, smaller diaphragm, which in turn controls a second larger diaphragm that enables flow of a large amount of fluid to pass the diaphragm in its open state. These two diaphragms linked together create an amplification effect for effectively controlling fluid flow at large diaphragms or large fluid pressures.

Fig. 3 is an exploded view of different portions of the electromagnetic actuator 10A. Fig. 3A is a cross-sectional view of the armature shown in Figs. 2 and 3, wherein the dimensions are preferably as follows wherein 1 inch represents 25,4 mm: A₁= 0.584 inch; A₂= 0.591 inch; A₃= 0.185 inch; A₄= 0.105 inch; A₅= 0.105 inch; A6= 0.065 inch; A₇= 27°; A₈= 0.050 inch; A₉= 0.086 inch; A₁₀= 0.016 inch; A₁₁= 0.030 inch; A₁₂= 0.080 inch; A₁₃= 0.050 inch; and A₁₄= 0.290 inch.

Fig. 3B is a cross-sectional view of rear pole piece 25, which has the following preferred dimensions: B₁= 0.251 inch; B₂= 0.145 inch; B₃= 0.008 x 45°; B₄= 0.171 inch; B₅= 0.120 inch; B₆= 0.065 inch; B₇= 0.181 inch; B₈= 0.032 inch; B₉= 0.16 (min) inch; and B₁₀= 0.42 (max).

Fig. 3C is a cross-sectional side view of bobbin 14, which has the following preferred dimensions: C₁= (Φ0.496 inch; C₂= Φ 0.380 inch; C₃= 0.010 x 45°; C₄= 0.143 inch; C₅= 0.685 inch; C₆= 0.095 inch; C₇= 4 x R.008 inch; C₈= Φ 0.270 inch; C₉= 0.050 inch; C₁₀= 0.330 inch; C₁₁= 0.355 inch; C₁₂= 2 x Φ 0.256 inch; C₁₃= 0.003 x 45° inch; C₁₄= 0.121 inch; C₁₅= 0.005 X 45°; C₁₆= Φ 0.230 inch; C₁₇= Φ 0.203 inch; C₁₈= 2 x 0.073 inch; C₁₉= 2 x .010 x 45°; C₂₀= 0.036 inch; C₂₁= 0.060 inch; C₂₂= Φ0.246 inch; and C₂₃= 2 X 0.10 X 45°.

Fig. 3D is a front view of coil stop 54, which has the following preferred dimensions: E₁= Φ 0.492 inch; E₂= Φ 0.232 inch; E₃= 0.005 x 45°; E₄= Φ 0.475 inch; E₅= 0.025 inch, E₆= 0.025 inch, E₇= 0.070 inch; and E₈= 0.120 inch.

Fig. 3E is a front view of radial magnet 23, which has the following preferred dimensions: F₁= 2 x 0.100 inch; F₂= 2x R.215 inch; F₃= Φ 0.500 inch; F₄= 0.075 inch; and F₅= 0.145 inch.

Fig. 3F is a cross-sectional side view of housing 18, which has the following preferred dimensions: G₁= 0.170 inch, G₂= 2 x Φ 0.502 inch; G₃= 0.020 inch; G₄= 0.030 inch; G₅= 0.617 inch; G₆= 0.463 inch; G₇= 0.110 inch; G₈= 90°; G₉= Φ 0.435 inch; G₁₀= Φ 0.505 inch; G₁₁= Φ 0.015 inch; G₁₂= Φ 0.610 inch; G₁₃= 0.139 inch; G₁₄= 0.104 inch; G₁₅= 0.250 inch; G₁₆= 0.060 inch; G₁₇= 0.070 inch; G₁₈= 0.015 X 45°; and G₁₉= 0.895 inch. The above are preferred dimensions that may be modified as known to a person of ordinary skill in the art.

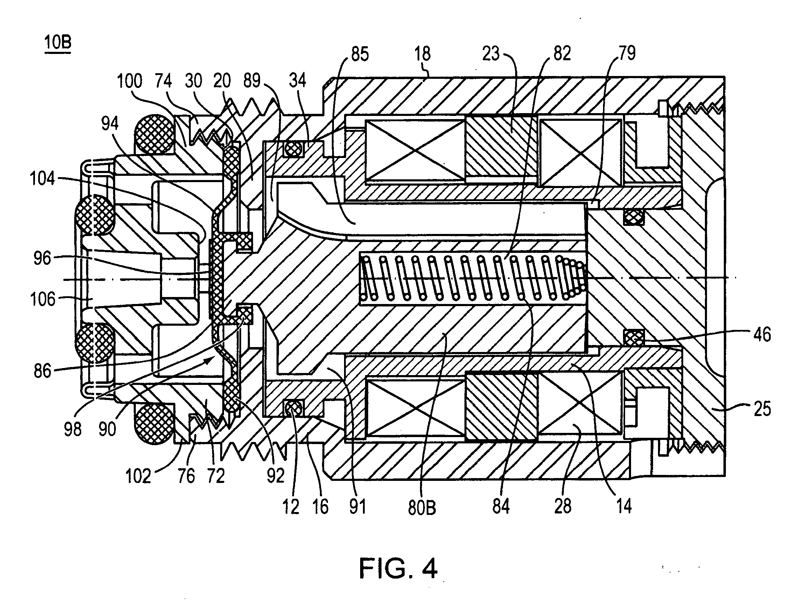

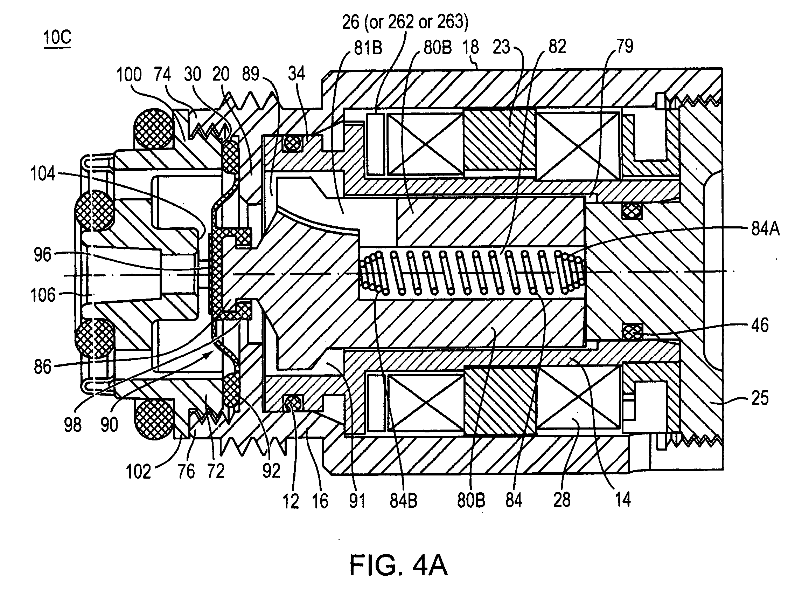

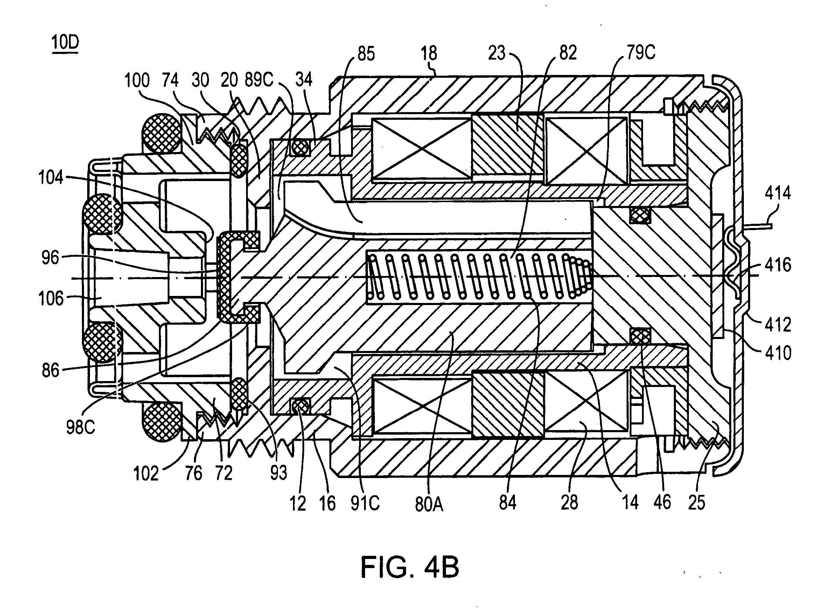

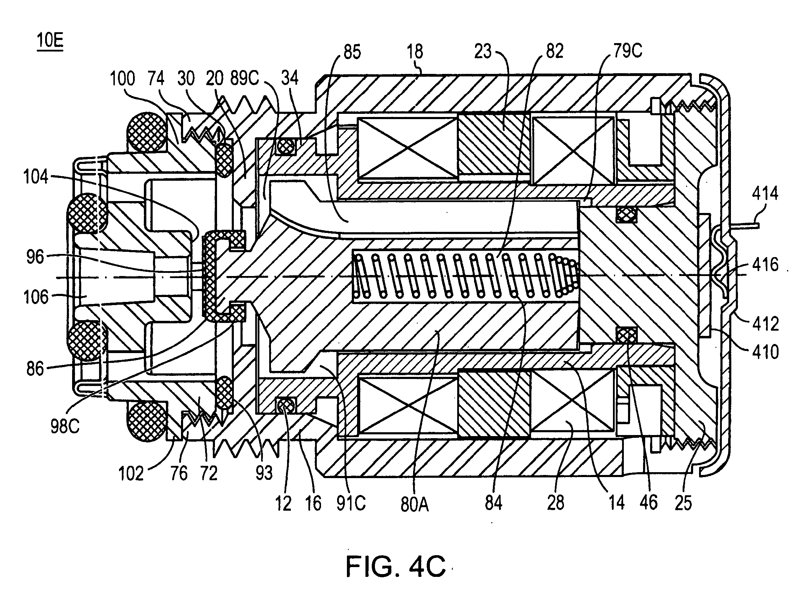

Fig. 4 illustrates another embodiment of an electromagnetic valve. The valve includes an actuator 10B including a resilient membrane 90 and a pilot body member 100. Actuator 10B includes an armature 80B housed in the armature cavity defined by bobbin 14, pole piece 25, and membrane 90. This actuator also includes solenoid windings 28 wound about solenoid bobbin 14. Housing 18 has a base 16 to hold pole piece 25 against bobbin 14 and thereby secure windings 28 and magnet 23 together. Armature 80A is also slideably mounted in the armature chamber, and is surrounded by non-corrosive, low viscosity armature fluid. Again, pilot body member 100 is attached by threading it onto actuator body 18. Armature 80B also has a tip (plunger tip 86) that again may have a circular, elliptical, rectangular or other cross-section, such as in valve 10A. In this exemplary embodiment, actuator armature 80B also includes a spring cavity 82 arranged to receive an optional spring 84, having tapered end portions. The tapered spring ends enable machine sorting and assembly. Spring 84 is usually not needed since the magnetic circuit, described in connection with Fig. 2, provides sufficient force for bistable operation of the latching actuator without any drive current in any of the hold positions.

Pole piece 25 can be unscrewed with respect to housing 18 (actuator body 18), which changes its location with respect to magnet 23. This translation changes the reluctance in the above-described magnetic circuit, which extends through housing 18, thereby manually changing the plunger displacement properties due to the magnetic field. The adjustment of pole piece 25 may be used to optimize the magnetic circuit, which enables the bistable arrangement of the actuator (i.e. a latching actuator). The optional use of spring 84 is mainly used when operating against high external pressures, for example, in direct valve arrangement, wherein passage 106 is connected to the fluid input.

Fig. 4A illustrates yet another embodiment of an electromagnetic valve, which embodiment is similar to the embodiment of Fig. 4. The electromagnetic valve includes actuator 10C and a pilot body member 100. Actuator 10C includes an armature 80B housed in the armature cavity defined by bobbin 14 and pole piece 25. The valve also has a resilient membrane 90, to prevent the controlled fluid from flowing into the armature chamber and hold the chamber liquid in the cavity holding armature 80B. Actuator 10C also includes solenoid windings 28 wound about solenoid bobbin 14. Housing 18 is shaped in the same way as described above, to hold pole piece 25 against bobbin 14, end secure windings 28 and magnet 23 together. Armature 80B is also slideably mounted in the armature chamber, and pilot body member 100 is attached by threading it onto actuator body 18. Actuator armature 80B also includes spring cavity 82 and spring 84. Spring 84 in this case also includes the tapered ends, 84A and B, which enable machine sorting and assembly. Armature 80A does not include a passage 85, extending length-wise down armature 80A.

Referring still to Fig. 4A, armature 80B includes a passage 81 B, which leads into the spring cavity. Passage 81 B thus provides a low-resistance path for the chamber fluid, so that the liquid surrounding armature 80B can easily move into the cavity, and thus enabling a rapid back-and-forth linear movement of armature 80B. In the absence of passage 85, the presence of a passage 81 B leading into spring cavity 82, alone enables rapid back-and-forth movement of armature 80A due to its providing a low-resistance path for the armature fluid to move within cavities 79, 91, 89 and 82. Again, the entire armature 80 is surrounded by, and floats in a non-corrosive, incompressible fluid located in the armature chamber. Importantly, both passages 85 and 81 B could be included in the armature to allow free motion of the chamber liquid.

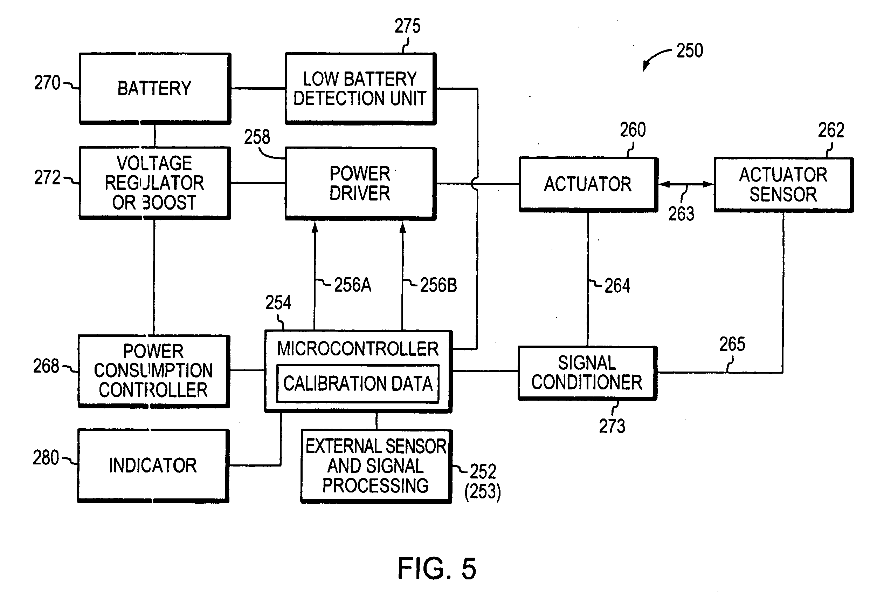

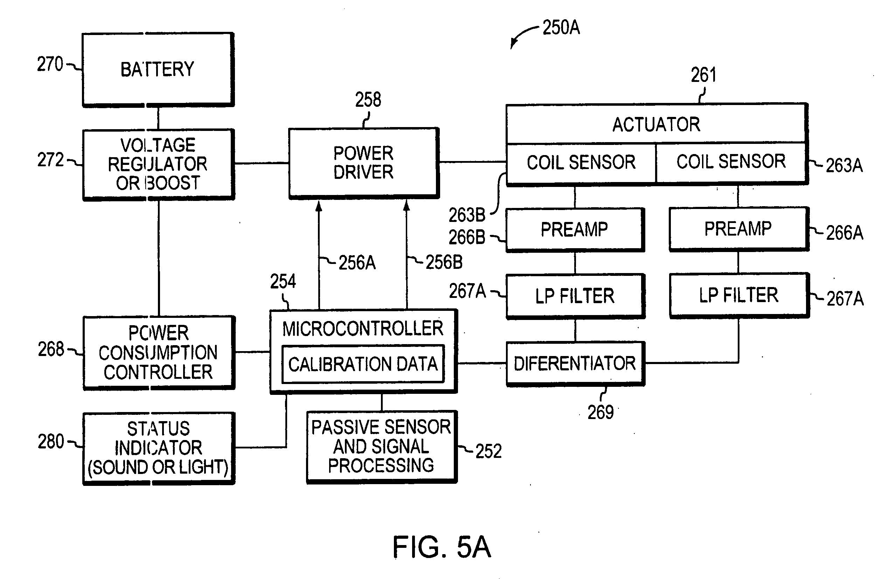

Referring still to Fig. 4A, armature 80B includes a plunger tip 86 surrounded by C-shaped part 98 of resilient membrane 90, as described above. Plunger tip 86 may have a circular, elliptical, rectangular or other cross-section. Actuator 10C also includes a valve sensor 26 (262 in Fig. 5 or 263 in Fig. 5A), which can detect the position of the armature to ascertain the response of the valve for the purposes of controlling it or assessing its performance.

Fig. 4B illustrates another embodiment of an electromagnetic valve. The valve includes an actuator 10D and a pilot body member 100. However, actuator 10D does not have a resilient membrane 90 (i.e., no barrier), and therefore the controlled fluid can flow into the armature chamber. Armature 80A is housed in the armature cavity defined by bobbin 14 and pole piece 25. The plunger tip is enclosed in a resilient, elastic encasement, 98C. Furthermore, there is an O-ring, 30 located between flange 20 and pilot body member 100. In this embodiment, the regulated fluid moves in through pilot passages 105 and 106, enters the armature cavity, and flows into well chambers 79, 89 and 91 of the armature pocket. Therefore, the armature in this embodiment has to be made of a non-corrosive material (since it is not encased in a non-corrosive fluid).

As described above, actuator 10C also includes solenoid coil 28 wound about bobbin 14. Housing 18 is shaped in the same way as described above, to hold pole piece 25 against bobbin 14, and secure windings 28 and magnet 23 together. As previously described, armature 80A is slideably mounted in the armature chamber, and pilot body member 100 is attached by threading it onto actuator body 18. The armature also includes plunger tip 86, and spring cavity 82 with spring 84.

Fig. 4C illustrates yet another embodiment of an electromagnetic valve. The valve includes an actuator 10E having similar elements as actuator 10D, and an additional element: a piezoelectric sensor (i.e., piezoelectric transducer). The piezoelectric sensor is designed to detect the movement of armature 80A. Piezoelectric sensor 410 responds to vibrations in the walls of housing 18, wherein its size and shape have been so chosen to maximize its response to the predominant frequency components. Furthermore, the piezoelectric sensor is normally is mounted in a location where the sounds to be detected are greatest in amplitude or most distinguishable from noise. The sensor includes a terminal 414, which provides electrical communication from the control circuit to one of the sensor 410's electrodes through a contact spring 416 secured in place by a plastic cap 412. This sensor is further explained in the context of the control circuit in the example given in Figs. 7 and 8, below.

Referring to Figs. 5 and 5A, the operation of the actuators 10A, 10B, and 10C is controlled by a control circuit 250 or 250A. To open the valve, a power driver 258 applies a drive current to coil 28 of any of the actuators described (represented by actuator 260 in Figs. 5 and 5A). The current orientation is such that the resultant magnetic flux displaces plunger tip 86 of the armature into a retracted position away from closure surface 104. (The electromagnetic force due to this current orientation acts against the force of spring 84 in the actuators shown in Figs. 4, 4A; 4B, and 4C). To dose the valve, the drive current applied to coii 28 has a polarity that induces magnetic flux having the orientation that forces plunger tip 86 onto valve seat 104.

Referring again to Fig. 2, armature 80 is held in a closed or open position without the application of the drive current (i.e., held in the latched or unlatched position at zero drive current) using the magnetic circuit provided by radial magnet 23. Specifically, radial magnet 23 provides magnetic flux paths 40 and 42 acting on linearly movable armature 80 made of a magnetically soft material In general, the magnetic force on armature 80 depends on the magnetic properties of the materials in the magnetic circuits, and also depends on two gaps created by the linear displacement of armature 80. Specifically, inside the armature cavity, there is a front gap located between flange 20 (i.e., shelf 20) and an armature shoulder 81 of armature 80. There is also a rear gap located between the rear of armature 80 and rear pole piece 25, near a rear chamber 79.

Flux path 40 extends from magnet 23 along and through cylindrical housing 18, through flange 20 and across the front gap to shoulder 81 of armature 80. Flux path 40 then extends along armature 80 through bobbin 14 back to magnet 23. Flux path 42 extends from magnet 23 along and through cylindrical housing 18, through rear pole piece 25 and across the rear gap to armature 80, and then extends along armature 80 and through bobbin 14 back to magnet 23.

After the coil drive linearly displaces armature 80 into the extended position, resilient membrane 90 presses against closure surface 104. In this extended position, the front gap between flange 20 and shoulder 81 is much smaller that the rear gap between armature 80 and rear pole piece 25. Since the front gap is smaller than the rear gap, the force along flux path 40 is larger than the force along flux path 42, and therefore, armature 80 is held in place without any drive current. That is, plunger 86 is held in the closed position solely by the force over the flux path 40.

After application of the opposite coil drive, armature 80 is linearly displaced into the retracted position by the electromagnetic force generated by the drive current in coil 28. In the retracted position, the valve passage is open since resilient membrane 90 no longer presses against closure surface 104. Now, the front gap between flange 20 and shoulder 81 is much larger that the rear gap between armature 80 and rear pole piece 25. Since the rear gap is smaller than the front gap, the force along flux path 42 is larger than the force along flux path 40. Therefore armature 80 is held in the retracted position without any drive current flowing in coil 28.

Referring to Figs. 2, 4 and 4A, electromagnetic actuators 10A, 10B and 10C are constructed to adjust the sizes of the front gap and the rear gap by rotatably displacing rear pole piece 25 within cylindrical housing 18. By screwing rear pole piece 25 farther into housing 18, pole piece 25 pushes inside the armature cavity coil stop 54, bobbin 14, coil 28 and armature 80 or 80A. Therefore, the linear excursion of armature 80 or 80A is reduced. This also reduces the total size of the front gap and the rear gap. Alternatively, by unscrewing rear pole piece 25 with respect to housing 18 (i.e., increasing the internal cavity size), the linear excursion of armature 80 or 80A is increased. This also increases the total size of the front gap and the rear gap. Therefore, electromagnetic actuators 10A, 10B and 10C are constructed to adjust the magnetic force by adjusting the position of rear pole piece 25 within enclosure housing 18.

Referring again to Figs. 4 and 4A, the embodiments of actuator 10B and 10C are constructed to provide an increased closure force of plunger tip 86 with respect to closure surface 104. Electromagnetic actuators 10B and 10C are constructed with armatures 80A and 80B, which include a spring cavity 82 and a spring 84. After the coil drive linearly displaces the armature into the extended position, spring 84 further increases the closure force of plunger tip 86, acting in addition to the magnetic force over flux path 40, described above. The embodiments of Figs. 4 and 4A are used for valves operating at higher pressures, or in the direct flow arrangement, where the fluid pressure acts directly opposite to plunger tip 86 or the armature.

After application of the opposite coil drive to the actuators shown in Figs. 4 and 4A, the armature 80A or 80B is linearly displaced into the retracted position by the electromagnetic force generated by the drive current in coil 28. In the retracted position, the front gap is much larger that the rear gap, and thus the force along flux path 42 is larger than the sum of the spring force (provided by spring 84) and the force along flux path 40. Therefore the armature is held in the retracted position without any current flowing in coil 28. Spring 84 has a spring constant selected to enable such a retracted state without any drive current. The magnetic circuits are again adjusted by adjusting the position of rear pole piece 25 within cylindrical housing 18.

The above-described latched and unlatched positions maintained without any drive current enable substantial reduction in power consumption. This, in turn, extends the life of battery 270 (Figs. 5 and 5A).

Membrane 90 isolates the pressurized chamber fluid and prevents mixing of the chamber fluid with the fluid being regulated. Thus, optimally membrane 90 is made of an impermeable material with minimal or no diffusion of the chamber liquid to the input or output conduit and vice versa. Since that the movement of armature 80 also stresses membrane 90 and applies relatively large amounts of pressure, the diffusion of fluids from one side of the membrane to the other may be increased. The diffusion of the chamber fluid out to the input or output conduit would, over time, deplete the chamber of its liquid and cause device failure. Thus, to maximize the efficiency of the invention over time, membrane 90 is preferably composed of a polymer or a polymer blend optimized to withstand the stress of armature movement while it minimizes permeability of the membrane.

The composition of the membrane may include polymer blends and fillers that bring about the proper hardness, maximize tear strength, minimize compression set, minimize extractable components, minimize modulus, and minimize diffusion and maximize impermeability. Components are preferably inert to the fluids being regulated (including any trace amounts of chemicals, e.g., chlorine or fluorine) as well as the chamber fluid, and to any changes in temperature or pH. For example, in a public restroom, the membrane is preferably inert to traces of chemicals present in potable water, as well as in various cosmetic applications. Further, the components of the membrane preferably take into account the way it will be manufactured as the composition of the membrane can improve the manufacturing process. For example, the fillers can be chosen so as to enhance the properties required for successful demolding of the membrane, and to enhance efficient curing.

For example, membrane 90 may include an EPDM/ bromobutyl blend, or Viton®. The first is a blend of EPDM (Ethylene Propylene Diene Monomer) and bromobutyl. EPDM is a rubber principally composed of ethylene and propylene which has low water absorption, as well as excellent abrasion and ageing resistance. It also can be compounded to obtain other desirable qualities. Viton® fluoroelastomer is a high molecular weight polyethylene membrane with the highest retention efficiency of any membrane known so far. EPDM elastomer is available from Harwick Standard Distribution Corporation (Akron, OH). Viton® fluoroelastomer is available from R.T. Vanderbuilt Company, Inc. (Norwalk, CT).

As described above, the chamber fluid is pressurized and isolated. The fluid composition may be selected to prevent growth of microorganisms that could eventually lead to device's failure. Optionally, to prevent this microorganismal contamination, several important actions can be taken: First, during manufacturing of the actuator, sterilization of the equipment, as well as of the chamber fluid being added to the device, may be performed. This should minimize the chances of contaminating the chamber fluid. Further, a preservative may be added to the armature liquid to eliminate any contaminating organisms. In this case, the preservative may vary depending on the context of the device. For example, in a public restroom, the preservative is best compatible with potable water, as well as cosmetic applications. Examples of possible preservatives to use in this context include Neolone™ 950 and Liquapar Oil™. Neolone™ 950 (2-methyl-4-isothiazolin-3-one and 2-methyl-3(2H) isothiazolinone) is a formaldehyde-free bactericidal solution, found to be very effective at low concentrations, and compatible with fungicides, which may be added separately. Neolone™ 950 is stable in high pH solutions, which include potable water systems, and which are generally difficult to preserve.

In general, the valve actuator may use different types of control circuits such as those described in U.S. Patents 5,781,399; 5,803,711; 5,815,365; or 6,021,038. Figs. 5 and 5A schematically illustrate control electronics 250 and 250A, powered by a battery 270, which can drive the valves' actuators and control them in relation to particular signals received by external passive sensor and signal processing unit 252. As shown in Fig. 5, control electronics 250 include battery regulation unit 272, no or low battery detection unit 275, passive sensor and signal processing unit 252, and microcontroller 254. Battery regulation unit 272 provides power for the whole system. Specifically, battery regulation unit 272 provides 6.0 V power to low battery detector 275, and 6.0 V to power driver 258. Furthermore, it provides a regulated 3.0 V power to a microcontroller 254.

The "low battery" detector 275 generates "low battery" signals in the form of pulses to microcontroller 254 to notify the microcontroller of the condition of the battery. Low battery detector 275 is coupled to the battery/power regulation through the 6.0V power it provides to the detector. When power drops below 4.2V, detector 275 generates a pulse to the microcontroller (i.e., a low battery signal). When the "low battery" signal is received, microcontroller 254 will flash indicator 280 (e.g., an LED) with a frequency of 1Hz, or may provide a sound alarm.

External sensor and signal processing module 252 checks for external signals to open and close the actuator to control a faucet, a bathroom flusher, or another device. Microcontroller 254 operates the valve actuator in response to a trigger signal from module 252 via power driver 258. Control circuit 250 can be constructed to operate different types of external object sensors that detect presence of a user or motion of a user. The external object sensor 252 can be an active optical sensor, a passive optical sensor, an ultrasonic sensor, or a capacitive sensor. Various optical sensors are described in U.S. Patents 5,984,262; 6,127,671; or 6,212,697. Preferred passive optical sensors are described in PCT Applications PCT/US03/38730 and PCT/US04/40887.

Referring still to Fig. 5, control electronics 250 receives signals from sensor and signal processing unit 252 and controls the actuator 260, a controller or microcontroller 254, an input element (e.g., the sensor 262), a solenoid driver (power driver 258) receiving power from a battery 270 regulated by a voltage regulator 272. Microcontroller 254 is designed for efficient power operation. To save power, microcontroller 254 is initially in a low frequency sleep mode and periodically addresses sensor 252 to see if it was triggered. After triggering, the microcontroller provides a control signal to a power consumption controller 268, which is a switch that powers up voltage regulator 272 (or a voltage boost, as required), passive sensor and signal processing unit 252, and a signal conditioner 273. (To simplify the block diagram, connections from power consumption controller 268 to passive sensor and signal processing unit 252 and to signal conditioner 273 are not shown.)

Microcontroller 254 can also receive an input signal from an external input element (e.g., a push button) that is designed for manual actuation or control input for actuator 260. Specifically, microcontroller 254 provides control signals 256A and 256B to power driver 258, which drives the actuator 260. Power driver 258 receives DC power from battery 270 and voltage regulator 272 regulates the battery power to provide a substantially constant voltage to power driver 258. An armature sensor 262 (actuator sensor 262) registers or monitors the armature position of actuator 260 and provides a control signal 265 to signal conditioner 273. A low battery detection unit 275 detects battery power and can provide an interrupt signal to microcontroller 254.

Actuator sensor 262 provides data to microcontroller 254 (via signal conditioner 273) about the motion or position of the actuator's armature, and this data is used for controlling power driver 258. The actuator sensor 262 may be present in a number of different ways: an electromagnetic sensor (e.g., a pick up coil), a sound sensor, a capacitive sensor, a Hall effect sensor, an optical sensor, a pressure transducer, or other type of a sensor.

Preferably, microcontroller 254 is an 8-bit CMOS microcontroller TMP86P807M made by Toshiba. The microcontroller has a program memory of 8 Kilobytes and a data memory of 256 bytes. Programming is done using a Toshiba adapter socket with a general-purpose PROM programmer. The microcontroller operates at 3 frequencies (f_{c} = 16MHz, f_{c} = 8MHz and fₛ = 332.768kHz), wherein the first two clock frequencies (f_{c}) are used in a normal mode and the third frequency (fₛ) is used in a low power mode (i.e., a sleep mode). Microcontroller 254 operates in the sleep mode between various actuations. To save battery power, microcontroller 254 periodically samples the passive sensor and signal-processing unit 252 for an input signal, and then triggers power consumption controller 268. Power consumption controller 268 powers up signal conditioner 273 and other elements. Otherwise, passive sensor and signal processing unit 252, voltage regulator (or voltage boost) 272 and signal conditioner 273 are not powered to save battery power. During operation, microcontroller 254 also provides data to status indicator 280. Control electronics 250 may receive a signal from a passive sensor or an active sensor. The passive sensor and signal-processing unit includes only a detector providing a detection signal to microcontroller 254.

Low battery detection unit 275 may be low battery detector model no. TC54VN4202EMB, available from Microchip Technology (http://www.microchip.com). Voltage regulator 272 may be the voltage regulator part no. TC55RP3502EMB, also available from Microchip Technology. Microcontroller 254 may alternatively be microcontroller part no. MCU COP8SAB728M9, available from National Semiconductor.

Since the above-described actuator is bistable, the control circuit can typically discontinue current flow after the valve has reached the desired state. Since the time required for the valve to reach the desired state can vary widely, conventional control circuits make the current-flow duration relatively long so that it will be adequate for worst-case conditions. Since most actuations are not performed under worst-case circumstances, though, coil drive typically continues for some time after the valve reaches its stable position. This is a waste of battery energy. To reduce this waste, a control circuit can monitor the armature with a sensor to determine the armature's state, and stop applying coil drive just before or when it reaches its final state. Therefore, a sensor reduces the energy waste that usually occurs in driving the actuator's armature. A sensor can also confirm that the valve is working properly and could potentially be used in monitoring the valve.

In general, to monitor the position of plunger tip 86 for regulation by the control electronics, the actuators include an actuator sensor or a coil sensor. This internal sensor, when placed on the housing, is able to detect vibrations from the impact of plunger tip 86 onto surface 104 (i.e., sound made by the armature in reaching the first end position). Alternatively, this internal sensor detects current passing through solenoid 28. Another option is for the sensor to measure the electromagnetic force from the solenoid. These measurements show the state of the condition of the valve. The sensor may be a piezoelectric transducer, a capacitive transducer, an inductive transducer, an optical transducer, or any other transducer directly or indirectly coupled to armature 80. Once the armature reaches the desired position, the internal sensor generates a sensor output indicative of the position sensed and provides this output to microcontroller 254.

Upon application of an opposite coil drive from microcontroller 254, power driver 258 provides drive current in the second drive direction to coil 28 and thereby drives the armature to a second end position. The internal sensor detects the armature position or the armature reaching the second end position. Microcontroller 254 not only controls applying the coil drive to coil 28, but is also responsive to the sensor output meeting a predetermined second current-termination criterion, and stops applying coil drive to the coil in the second direction. The first and second current-termination criteria may in general differ.

The actuator sensor 262 can be a piezoelectric transducer that responds to vibrations in the housing wall. As described above, the piezoelectric element's size and shape have typically been so chosen as to maximize its response to the predominant frequency components, and it normally is mounted in a location where the sounds to be detected are greatest in amplitude or most distinguishable from noise.

Alternatively, the armature sensor is a capacitive sensor that includes one plate located on a stationary actuator surface and the other plate located on a surface of moving armature 80. The movement of armature 80 causes relative displacement of two capacitor plates, which in turn changes the measured capacitance value. Based on the capacitance value, the capacitive sensor determines the end position or any instantaneous position of armature 80 (and thus the position of plunger tip 86).

Alternatively, the armature sensor is an optical sensor that includes an optical source and an optical detector. The source emits optical radiation that is reflected from (or possibly transmitted through) a surface of the armature and detected by the detector. The reflection surface modifies the emitted optical signal. Thus, the detected signal varies depending on the position of the armature (i.e., instantaneous location of plunger tip 86). Based on the detected optical signal, the optical sensor determines the end position or any instantaneous position of armature 80. Alternatively, the armature sensor uses a source of electromagnetic radiation and a corresponding detector. The detector measures perturbation of the generated electromagnetic radiation by the armature depending on the location of the armature. Based on the detected perturbed radiation, the sensor determines the end position or any instantaneous position of the armature.

A terminal can provide electrical communication to one of the transducer's electrodes through a contact spring secured in place by a plastic cap, for example, while the other transducer electrode may be shared with coil 28, e.g., if the transducer is secured to the housing 18 by conductive bonding between the housing and that electrode.

Referring to Fig. 5, the sensor provides a sensor signal when armature 80 reaches an endpoint and causes housing vibration: as sonic amplitude is higher when the valve opens than when it closes, microcontroller 254 sets a threshold whose value when the valve is being opened is different from the value it has when the valve is being closed. It can, for example, convert the resistance of a photoresistor checking for light signals to a pulse, which is sent to microcontroller 254 through the charge pulse signal. Pulse width changes correspond to the changes in light detected for an actuator, and this will, in turn, cause control of the actuator (i.e., opening or closing of a valve due to the light changes).

For example, upon receiving a trigger signal from passive sensor and signal processing unit 252, microcontroller 254 may provide an "open" signal to power driver 258, when the sensor detects a user leaving a flusher's vicinity. This causes current to be driven through actuator 28's coil in the direction that will cause the valve to open. Furthermore, microcontroller 254 may provide a "close" signal after the valve has been open for a predetermined duration.

When the open signal current starts flowing, the sensor output is less than the threshold, so the sensor is not receiving sound of a magnitude consistent with the armature's reaching the end of its travel. The microcontroller 254 therefore keeps the OPEN signal asserted. But the sensor's output changes in response to the sound made by the armature 80 at the end of its travel. When armature 80 has reached that point, the valve will stay open without current flow, so the microcontroller de-asserts its OPEN output and thereby stops applying drive current to actuator coil 28. The result usually is that the current-flow duration has been much less than the time required to open the valve under worst-case conditions, so the system has saved considerable energy.

To close the valve, the microcontroller 254 asserts its CLOSE output and thereby applies the drive signal to actuator coil 28 in the opposite direction. Again, the microcontroller allows current flow only until sensor 262 informs it that the armature has reached the end of its travel.

Control circuit 250 can be used to control not only the drive signal's duration but also its magnitude. The drive signal duration may be in the range of less than about 1 msec to about 10 msec, and preferably in the range of 1.5 msec to 8 msec. A coil-drive level high enough for ordinary operation may occasionally be inadequate, and the coil-drive level can be increased if the armature fails to reach the endpoint. One way to increase the coil-drive level is to increase the voltage on capacitors discharged through the actuator coil.

Under some conditions, various factors (e.g., element expansion due to high temperature, high actuator fluid viscosity due to low temperature, degradation of membrane 90 or other actuator elements) may make it harder than usual to displace armature 80. However, the drive signal is normally set at normal operation values. Otherwise, energy consumption would be unnecessarily high if, during normal operation, the battery voltage were set high enough to deai with such more-difficult circumstances. The present embodiment therefore regularly uses a battery-voltage level that is adequate for normal situations, and thus saves power.

Moreover, although a simple amplitude criterion has been employed to determine whether the armature has reached the end of its travel, other criteria may be found preferable for some applications. For instance, the sonic signal could be sampled and compared by signal processing with a stored waveform known to be characteristic of the armature's reaching one of its endpoints. The stored signal may be different for different endpoints, and there may be circumstances in which it will be considered valuable to use such a comparison to distinguish between the actuator's two states.

Fig. 5A schematically illustrates another embodiment of control electronics 250. Control electronics 250A receives signals from passive sensor and signal processing unit 252 and controls actuator 261. As described above, the control electronics also includes microcontroller 254, solenoid driver 258 (i.e., power driver), voltage regulator 272, and a battery 270. Solenoid actuator 261 includes two coil sensors, 263A and 263B (for example, wire loops around coil 28). Coil sensors 263A and 263B provide a signal to the respective preamplifiers 266A and 266B and low pass filters 267A and 267B. A differentiator 269 provides the differential signal to microcontroller 254 in a feedback loop arrangement.

To open a fluid passage, microcontroller 254 sends an OPEN signal 256B to power driver 258, which provides a drive current to the drive coil of actuator 261 in the direction that will retract the armature. At the same time, coils 263A and 263B provide induced signal to the conditioning feedback loop, which includes the preamplifier and the low-pass filter. If the output of differentiator 269 indicates less than a selected threshold calibrated for the retracted armature (i.e., signaling that the armature did not reach a selected position), microcontroller 254 maintains the OPEN signal 256B asserted. If no movement of the solenoid armature is detected, microcontroller 254 can apply a different (higher) level of OPEN signal 256B to increase the drive current (up to several times the normal drive current) provided by power driver 258 This way, the system can move the armature, which is stuck due to some operational problem or debris located in the armature chamber.

Microcontroller 254 can detect the armature displacement (or even monitor armature movement) using induced signals in coils 263A and 263B provided to the conditioning feedback loop. As the output from differentiator 269 changes in response to the armature displacement, microcontroller 254 can apply a different (lower) level of OPEN signal 256B, or can turn off OPEN signal 256B, which in turn directs power driver 258 to apply a different level of drive current. The result usually is that the drive current is reduced, or the duration of the drive current is much shorter than the time required to open the fluid passage under worst-case conditions (those that have to be used without using an armature sensor). Therefore, the control system saves considerable energy and thus extends the life of battery 270.

Advantageously, the arrangement of coil sensors 263A and 263B can detect latching and unlatching movement of the actuator armature with great precision. (However, a single coil sensor, or multiple coil sensors, or capacitive sensors may also be used to detect movement of the armature.) Microcontroller 254 can direct a selected profile of the drive current applied by power driver 258. Various profiles may be stored in microcontroller 254, and may be actuated based on the fluid type, the fluid pressure, the fluid temperature, the time actuator 261 has been in operation since installation or last maintenance, battery level, input from an external sensor (e.g., a movement sensor or a presence sensor), or other factors. Based on the liquid pressure and the known sizes of the orifices, the automatic valve can deliver a known amount of liquid.

In general, the valve actuator may use different types of control circuits such as the circuits described in U.S. Pat. Nos. 5,781,399; 5,803,711; 5,815,365; or 6,021,038. The object sensor may be an ultrasonic sensor, a capacitive sensor, or an optical sensor such as any one of the sensors described in U.S. Pat. Nos. 5,984,262; 6,127,671; or 6,212,697. According to another embodiment, the object sensor is a passive optical sensor described in PCT application PCT/US2003/038730, published as WO2004/051011.

The above-described actuators can be used in many different applications particularly due to its small size and the above-described advantages. For example, the actuators may be used in electronic faucets described in PCT Application PCT/US2002/38757, published as WO2003/048463. which is incorporated by reference. The small size of the actuators enables their placement inside the faucet next to a sink. The actuators may be used in the automatic bathroom flushers described in detail in US Application 10/783,906, filed on February 20, 2004, or US patent publication US 2004/0164261 A1. Alternatively, the valve actuator can be used in a bathroom flusher described in US patent application US 2004/0232370 A1.

Furthermore, the above-described valve actuators are suitable for numerous other applications. For example, the described valve actuator can be used in a two-fluid valve described in U.S. Patents 6,508,272 or 6,874,535. Alternatively, the valve actuator can be used in a fluid dispensing system described in U.S. Patent 6,161,726 or PCT Application PCT/US99/30898 (published as WO 00/38561). Furthermore, the valve actuator can be used in various irrigation systems used in agriculture or gardening. In all cases, the small size of the actuators enables compact devices, and the low power consumption increases significantly the battery life of the devices.

## Claims

1. An electromagnetic valve system, comprising:
a valve including a valve passage (105, 106);
an electromagnetic actuator (10A, 10B, 10C, 10D, 10E), comprising:
a solenoid housing (18) constructed and arranged to receive a solenoid coil (28) and an armature housing (14) constructed and arranged to receive in an armature chamber (89, 91) a ferromagnetic armature (80) linearly movable inside said armature chamber between an extended position designed to close said valve passage and a retracted position designed to open said valve passage, said ferromagnetic armature (80) including a distal part (86) and a shoulder (81);
a flange (20) extending from said solenoid housing and being cooperatively arranged with said shoulder;
a control circuit (250) constructed to apply a coil drive current to said solenoid coil (28) and thereby cause a linear displacement of said ferromagnetic armature (80) having said distal part (86) with respect to said valve passage (105, 106) controlled by said actuator, said displacement of said distal part (86) closes said valve passage when said distal part (86) is extended and opens said valve passage when said distal part (86) is retracted;
a radial magnet (23) constructed and arranged to maintain said armature (80) stationary, by a force of a magnetic field, in a closed state having said distal part (86) of said armature extended and in an open state having said distal part retracted; and
a pole piece (25) coupled to said solenoid housing and arranged with said ferromagnetic armature and said solenoid housing to provide a first magnetic flux path (42) between the poles of said radial magnet (23), and said solenoid housing (18) having said flange (20) cooperatively arranged with said shoulder (81) and said armature (80) providing a second magnetic flux path (40) between the poles of said radial magnet (23), wherein the position of said pole piece (25) with respect to said solenoid housing (18) is adjustable by movement over a threaded surface thereby controlling the excursion of said armature and said force over said first magnetic flux path and said second magnetic flux path.

2. The electromagnetic valve system of claim 1, wherein said radial magnet includes a single ring-like member.

3. The electromagnetic valve system of claim 1, wherein said radial magnet includes two or more semicircular members.

4. The electromagnetic valve system of claim 1, wherein said radial magnet includes several discrete magnets located radially with respect to said armature.

5. The electromagnetic valve system of claim 1, wherein said armature includes a fluid passage enabling flow of said fluid between said distal and proximal parts of said armature thereby enabling a rapid movement of said armature with respect to said armature housing.

6. The electromagnetic valve system of claim 1 or 5, wherein said armature includes a cavity (82) for receiving a bias spring (84) positioned and arranged to bias said armature toward its extended position.

7. The electromagnetic valve system of any one of the above claims, wherein said actuator includes a membrane arranged to enclose at least partially said distal part of said armature and seal fluid inside said armature chamber, wherein said membrane is displaced by said distal part of said armature by application of said coil drive current.

8. The electromagnetic valve system of any one of the above claims, wherein said control circuit is operatively connected to an external sensor (252); said external sensor providing a signal to said control circuit.

9. The electromagnetic valve system of claim 8, wherein said external sensor includes an optical sensor.

10. The electromagnetic valve system of claim 8, wherein said external sensor includes an ultrasonic sensor.

11. The electromagnetic valve system of claim 8, wherein said external sensor includes a capacitive sensor.

12. The electromagnetic valve system of any one of the above claims, further including a battery (270) for providing power to said control circuit.

13. The electromagnetic valve system of any one of the above claims, further including an actuator sensor (262) constructed to detect displacement of said armature.

14. The electromagnetic valve system of any one of the above claims, further including a coil sensor (263A, 263B) constructed to detect displacement of said armature.

15. The electromagnetic valve system of claim 14, wherein said coil sensor provides signals to a microcontroller in a feedback loop arrangement.

16. The electromagnetic valve system of any one of the above claims, wherein said valve is formed by a replaceable pilot body member (100), said pilot body member defining the valve geometry.

17. The electromagnetic valve system of any one of the above claims used in an automatic faucet.

18. The electromagnetic valve system of any one of the above claims used in an automatic bathroom flusher.

19. A method of controlling a valve passage, comprising:
providing a valve including a valve passage (105, 106) enabling fluid flow
providing an electromagnetic actuator (10A, 10B, 10C, 10D, 10E) including
a solenoid housing (18) constructed and arranged to receive a solenoid coil (28) and an armature housing (14) constructed and arranged to receive in an armature chamber (89, 91) a ferromagnetic armature (80) linearly movable inside said armature chamber between an extended position designed to close said valve passage and a retracted position designed to open said valve passage, said ferromagnetic armature including a distal part (86) and a shoulder (81);
a flange (20) extending from said solenoid housing and being cooperatively arranged with said shoulder;
a radial magnet (23) constructed and arranged to maintain said armature stationary, by a force of a magnetic field, in a closed state having said distal part of said armature extended and in an open state having said distal part retracted; and
a pole piece (25) coupled to said solenoid housing and arranged with said ferromagnetic armature and said solenoid housing to provide a first magnetic flux path (42) between the poles of said radial magnet, and said solenoid housing with said flange and said armature having said shoulder providing a second magnetic flux path (40) between the poles of said radial magnet;
applying a coil drive current to said solenoid coil acting on said ferromagnetic armature and thereby causing a linear displacement of said distal part with respect to said valve passage and thus closing said valve passage; and
maintaining said ferromagnetic armature in a stationary position by a force of a magnetic field over said second magnetic flux path without application of said coil drive,
adjusting the position of said pole piece with respect to said solenoid housing by movement of the pole piece over a threaded surface, thereby controlling the excursion of said armature and said force over said first magnetic flux path and said second magnetic flux path.

20. The method of claim 19 including changing said magnetic flux path outside said armature.

21. The method of claim 19 including providing a signal to said control circuit from an external sensor.

22. The method of claim 21, wherein said external sensor includes an optical sensor.

23. The method of claim 21, wherein said external sensor includes an ultrasonic sensor.

24. The method of claim 21, wherein said external sensor includes a capacitive sensor.

25. The method of claim 19 including providing battery power to said control circuit.

26. The method of claim 19 including providing a signal to said control circuit from an actuator sensor (262) constructed to detect displacement of said armature.

27. The method of any one of the method claims, wherein said valve is formed by a pilot body member (100), and said method including replacing said actuator by unscrewing said actuator from said pilot body member.

## Patentansprüche

1. Ein Elektromagnet-Ventilsystem, das Folgendes aufweist:
ein Ventil einschließlich eines Ventildurchlasses (105, 106);
einen Elektromagnetbetätiger (10A, 10B, 10C, 10D, 10E), der Folgendes aufweist:
ein Elektromagnetgehäuse (18), das aufgebaut und angeordnet ist zum Aufnehmen einer Elektromagnetspule (28) und eines Ankergehäuses (14), das aufgebaut und angeordnet ist zum Aufnehmen in einer Ankerkammer (89, 91) eines ferromagnetischen Ankers (80), und zwar linear bewegbar innerhalb der Ankerkammer zwischen einer ausgefahrenen Position, die zum Schließen des Ventildurchlasses dient, und einer zurückgezogenen Position, die zum Öffnen des Ventildurchlasses dient, wobei der ferromagnetischen Anker (80) einen körperfernen Teil (86) und eine Schulter (81) aufweist;
einen Flansch (20), der sich von dem Elektromagnetgehäuse erstreckt und zur Zusammenarbeit mit der Schulter angeordnet ist;
eine Steuerschaltung (250), die aufgebaut ist zum Anlegen eines Spulenantriebsstroms an die Elektromagnetspule (28) um dadurch eine lineare Verschiebung des ferromagnetischen Ankers (80), der das körperferne Ende (86) aufweist, zu bewirken und zwar bezüglich des Ventildurchlasses (105, 106), und zwar gesteuert durch den Betätiger, wobei die Verschiebung des distalen Teils (86) den Ventildurchlass schließt, wenn das distale Teil (86) ausfährt und wobei die Verschiebung des distalen Teils (86) den Ventildurchlass öffnet, wenn das distale Teil (86) zurückgezogen wird;
einen Radialmagent (23), der aufgebaut und angeordnet ist zum stationären Halten des Ankers (80) durch die Kraft eines Magnetfeldes in einem geschlossenen Zustand in dem der distale Teil (86) des Ankers ausgefahren ist und in einem geöffneten Zustand, in dem der distale Teil zurückgezogen ist; und
ein Polstück (25), das mit dem Elektromagnetgehäuse gekoppelt ist und mit dem ferromagnetischen Anker und dem Elektromagnetgehäuse angeordnet ist, zum Vorsehen eines ersten Magnetflusspfads (42) zwischen den Polen des Radialmagneten (23) und dem Elektromagnetgehäuse (18), dessen Flansch (20) zusammenwirkend mit der Schulter (81) angeordnet ist, und wobei der Anker (80) einen zweiten Magnetflusspfad (40) zwischen den Polen des Radialmagneten (23) vorsieht, wobei die Position des Polstücks (25) bezüglich des Elektromagnetgehäuses (18) einstellbar ist durch Bewegung über eine Gewindeoberfläche, um dadurch die Bewegung des Ankers und die Kraft über den ersten Magnetflusspfad und den zweiten Magnetflusspfad zu steuern.

2. Elektromagnet-Ventilsystem nach Anspruch 1, wobei der Radialmagnet ein einzelnes ringartiges Glied umfasst.

3. Elektromagnet-Ventilsystem nach Anspruch 1, wobei der Radialmagnet zwei oder mehr halbkreisförmige Glieder umfasst.

4. Elektromagnet-Ventilsystem nach Anspruch 1, wobei der Radialmagnet mehrere diskrete Magnete umfasst, die radial bezüglich des Ankers angeordnet sind.

5. Elektromagnet-Ventilsystem nach Anspruch 1, wobei der Anker einen Fluiddurchlass umfasst, der eine Strömung des Fluids zwischen den körperfernen und körpernahen Teilen des Ankers erlaubt, um dadurch eine rasche Bewegung des Ankers bezüglich des Ankergehäuses zu ermöglichen.

6. Elektromagnet-Ventilsystem nach Anspruch 1 oder 5, wobei der Anker einen Hohlraum (82) aufweist zum Aufnehmen einer Vorspannfeder (84), die positioniert und angeordnet ist um den Anker zu seiner ausgefahrenen Position vorzuspannen.

7. Elektromagnet-Ventilsystem nach einem der vorhergehenden Ansprüche, wobei der Betätiger eine Membran umfasst, die angeordnet ist um wenigstens teilweise den körperfernen Teil des Ankers zu umgeben und ein Fluid innerhalb der Ankerkammer abzudichten, wobei die Membran durch den körperfernen Teil des Ankers versetzt wird durch Anlegen des Spu lenantriebstroms.

8. Elektromagnet-Ventilsystem nach einem der vorhergehenden Ansprüche, wobei die Steuerschaltung betriebsmäßig mit einem externen Sensor (252) verbunden ist; wobei der externe Sensor ein Signal an die Steuerschaltung vorsieht.

9. Elektromagnet-Ventilsystem nach Anspruch 8, wobei der externe Sensor einen optischen Sensor umfasst.

10. Elektromagnet-Ventilsystem nach Anspruch 8, wobei der externe Sensor einen Ultraschallsensor umfasst.

11. Elektromagnet-Ventilsystem nach Anspruch 8, wobei der externe Sensor einen kapazitiven Sensor umfasst.

12. Elektromagnet-Ventilsystem nach einem der vorhergehenden Ansprüche, das ferner eine Batterie (270) umfasst zum Vorsehen von Leistung an die Steuerschaltung.

13. Elektromagnet-Ventilsystem nach einem der vorhergehenden Ansprüche, das ferner einen Betätigersensor (262) umfasst, der aufgebaut ist zum Detektieren eines Versatzes des Ankers.

14. Elektromagnet-Ventilsystem nach einem der vorhergehenden Ansprüche, das ferner einen Spulensensor (263A, 263B) aufweist, der aufgebaut ist zum Detektieren eines Versatzes des Ankers.

15. Elektromagnet-Ventilsystem nach Anspruch 14, wobei der Spulensensor Signale an einen Microcontroller in einer Rückkopplungsschleifenanordnung liefert.

16. Elektromagnet-Ventilsystem nach einem der vorhergehenden Ansprüche, wobei das Ventil gebildet wird durch ein austauschbares Pilotkörperglied (100), wobei das Pilotkörperglied die Ventilgeometrie definiert.

17. Elektromagnet-Ventilsystem nach einem der vorhergehenden Ansprüche, wie es in einem automatischen Hahn bzw. Wasserhahn verwendet wird.

18. Elektromagnet-Ventilsystem nach einem der vorhergehenden Ansprüche, wie das in einem automatischen Bad-Spülsystem verwendet wird.

19. Verfahren zum Steuern eines Ventildurchlasses, wobei das Verfahren Folgendes aufweist:
Vorsehen eines Ventils einschließlich eines Ventildurchlasses (105, 106), der eine Fluidströmung ermöglicht;
Vorsehen eines Elektromagnetbetätigers (10A, 10B, 10C, 10D, 10E), der Folgendes aufweist:
ein Elektromagnetgehäuse (18), das aufgebaut und angeordnet ist zum Aufnehmen einer Elektromagnetspule (28) und eines Ankergehäuses (14), das aufgebaut und angeordnet ist zum Aufnehmen in einer Ankerkammer (89, 91) eines ferromagnetischen Ankers (80), und zwar linear bewegbar innerhalb der Ankerkammer zwischen einer ausgefahrenen Position, die zum Schließen des Ventildurchlasses dient und einer zurückgezogenen Position, die zum Öffnen des Ventildurchlasses dient, wobei der ferromagnetische Anker einen distalen Teil (86) und eine Schulter (81) aufweist;
einen Flansch (20), der sich von dem Elektromagnetgehäuse erstreckt und zusammenwirkend mit der Schulter angeordnet ist;
einen Radialmagnet (23), der aufgebaut und angeordnet ist um den Anker stationär zu halten, und zwar durch die Kraft eines Magnetfeldes, und zwar in einem geschlossenen Zustand, in dem der distale Teil des Ankers ausgefahren ist, und in einem geschlossenen Zustand, in dem der distale Teil zurückgezogen ist; und
ein Polstück (25), das mit dem Elektromagnetgehäuse gekoppelt ist und bezüglich des ferromagnetischen Ankers und des Elektromagnetgehäuses angeordnet ist zum Vorsehen eines ersten Magnetflusspfades (42) zwischen den Polen des Radialmagneten, und wobei das Elektromagnetgehäuse mit dem Flansch und dem Anker mit der Schulter einen zweiten Magnetflusspfad (40) zwischen den Polen des Radialmagneten vorsieht;
Anlegen eines Spulenantriebsstroms an die Elektromagnetspule, welche auf den ferromagnetischen Anker wirkt und dadurch eine lineare Verschiebung des körperfernen Teils bezüglich des Ventildurchlasses bewirkt und somit den Ventildurchlass schließt; und
Halten des ferromagnetischen Ankers in einer stationären Position durch die Kraft eines Magnetfeldes über den zweiten Magnetflusspfad ohne Anlegen des Spulenantriebsstroms;
Einstellen der Position des Polstücks bezüglich des Elektromagnetgehäuses durch Bewegung des Polstücks über eine Gewindeoberfläche, um dadurch die Bewegung des Ankers und die Kraft über den ersten Magnetflusspfad und den zweiten Magnetflusspfad einzustellen.

20. Verfahren nach Anspruch 19, welches das Verändern des Magnetflusspfads außerhalb des Ankers umfasst.

21. Verfahren nach Anspruch 19, welches das Vorsehen eines Signals an die Steuerschaltung von einem externen Sensor umfasst.

22. Verfahren nach Anspruch 21, wobei der externe Sensor einen optischen Sensor umfasst.

23. Verfahren nach Anspruch 21, wobei der externe Sensor einen Ultraschallsensor umfasst.

24. Verfahren nach Anspruch 21, wobei der externe Sensor einen kapazitiven Sensor umfasst.

25. Verfahren nach Anspruch 19, welches das Vorsehen von Batterieleistung an die Steuerschaltung umfasst.

26. Verfahren nach Anspruch 19, welches das Vorsehen eines Signals an die Steuerschaltung von einem Betätigersensor (262) umfasst, der aufgebaut ist zum Detektieren eines Versatzes des Ankers.

27. Verfahren nach einem der Verfahrensansprüche, wobei das Ventil ausgebildet ist durch ein Pilotkörperglied (100), und wobei das Verfahren ferner das Ersetzen des Betätigers durch Abschrauben des Betätigers von dem Pilotkörperglied aufweist.

## Revendications

1. Système de soupape électromagnétique comprenant :
une soupape comprenant un passage de soupape (105, 106) ;
un actionneur électromagnétique (10A, 10B, 10C, 10D, 10E), comprenant :
un logement d'électro-aimant (18) constitué et agencé pour recevoir une bobine d'électro-aimant (28) et un logement d'armature (14) constitué et agencé pour recevoir dans une chambre d'armature (89, 91) une armature ferromagnétique (80) mobile de façon rectiligne dans la chambre d'armature entre une position étendue prévue pour fermer le passage de soupape et une position rétractée prévue pour ouvrir le passage de soupape, l'armature ferromagnétique (80) incluant une partie distale (86) et un épaulement (81) ;
un flasque (20) s'étendant à partir du logement d'électro-aimant et étant agencé pour coopérer avec ledit épaulement ;
un circuit de commande (250) constitué pour appliquer un courant de commande de bobine à la bobine d'électro-aimant (28) et provoquer ainsi un déplacement rectiligne de l'armature ferromagnétique (80) ayant une partie distale (86) par rapport au passage de soupape (105, 106) commandé par actionneur, le déplacement de la partie distale (86) fermant le passage de soupape quand la partie distale (86) est étendue et ouvrant le passage de soupape quand la partie distale (86) est rétractée ;
un aimant radial (23) constitué et agencé pour maintenir l'armature (80) fixe, sous l'effet d'un champ magnétique, dans un état fermé quand la partie distale (86) d'armature est étendue et dans un état ouvert quand la partie distale est rétractée ; et
une pièce polaire (25) couplée au logement d'électroaimant et agencée avec l'armature ferromagnétique et le logement d'électro-aimant pour constituer un premier trajet de flux magnétique (42) entre les pôles de l'aimant radial (23), le logement d'électro-aimant (18) comportant le flasque (20) étant agencé pour coopérer avec l'épaulement (81) et l'armature (80) constituant un second trajet de flux magnétique (40) entre les pôles de l'aimant radial (23),
dans lequel la position de la pièce polaire (25) par rapport au logement d'électro-aimant (18) est réglable par déplacement sur une surface filetée, commandant ainsi l'excursion de l'armature et la force sur le premier trajet de flux magnétique et le second trajet de flux magnétique.

2. Système de soupape électromagnétique selon la revendication 1, dans lequel l'aimant radial comprend un élément unique en forme de bague.

3. Système de soupape électromagnétique selon la revendication 1, dans lequel l'aimant radial comprend deux ou plusieurs éléments semi-circulaires.

4. Système de soupape électromagnétique selon la revendication 1, dans lequel l'aimant radial comprend plusieurs aimants discrets disposés radialement par rapport à l'armature.

5. Système de soupape électromagnétique selon la revendication 1, dans lequel l'armature comprend un passage de fluide permettant la circulation du fluide entre les parties distale et proximale de l'armature, permettant ainsi un déplacement rapide de l'armature par rapport au logement d'armature.

6. Système de soupape électromagnétique selon la revendication 1 ou 5, dans lequel l'armature comprend une cavité (82) pour recevoir un ressort une sollicitation (84) disposé et agencé pour solliciter l'armature vers sa position d'extension.

7. Système de soupape électromagnétique selon l'une quelconque des revendications précédentes, dans lequel l'actionneur comprend une membrane agencée pour fermer au moins partiellement la partie distale de l'armature et le fluide de scellement dans la chambre d'armature, dans lequel la membrane est déplacée par la partie distale de l'armature par application du courant d'excitation de bobine.

8. Système de soupape électromagnétique selon l'une quelconque des revendications précédentes, dans lequel le circuit de commande est connecté en fonctionnement à un capteur externe (252), le capteur externe fournissant un signal au circuit de commande.

9. Système de soupape électromagnétique selon la revendication 8, dans lequel le capteur externe comprend un capteur optique.

10. Système de soupape électromagnétique selon la revendication 8, dans lequel le capteur externe comprend un capteur à ultrasons.

11. Système de soupape électromagnétique selon la revendication 8, dans lequel le capteur externe comprend un capteur capacitif.

12. Système de soupape électromagnétique selon l'une quelconque des revendications précédentes, comprenant en outre une batterie (270) pour fournir une alimentation au circuit de commande.

13. Système de soupape électromagnétique selon l'une quelconque des revendications précédentes, comprenant en outre un capteur d'actionneur (262) constitué pour détecter un déplacement de l'armature.

14. Système de soupape électromagnétique selon l'une quelconque des revendications précédentes, comprenant en outre un capteur de bobine (263A, 263B) constitué pour détecter un déplacement de l'armature.

15. Système de soupape électromagnétique selon la revendication 14, dans lequel le capteur de bobine fournit des signaux à un microcontrôleur dans un agencement en boucle de réaction.

16. Système de soupape électromagnétique selon l'une quelconque des revendications précédentes, dans lequel la soupape est formée par un élément de corps pilote remplaçable (100), l'élément de corps pilote définissant la forme de la soupape.

17. Système de soupape électromagnétique selon l'une quelconque des revendications précédentes, utilisé dans un robinet automatique.

18. Système de soupape électromagnétique selon l'une quelconque des revendications précédentes, utilisé dans une douche automatique de salle de bain.

19. Procédé de commande d'un passage de soupape comprenant :
prévoir une soupape comprenant un passage de soupape (105, 106) permettant une circulation de fluide ;
prévoir un actionneur électromagnétique (10A, 10B, 10C, 10D, 10E), comprenant :
un logement d'électro-aimant (18) constitué et agencé pour recevoir une bobine d'électro-aimant (28) et un logement d'armature (14) constitué et agencé pour recevoir dans une chambre d'armature (89, 91) une armature ferromagnétique (80) mobile de façon rectiligne dans la chambre d'armature entre une position étendue prévue pour fermer le passage de soupape et une position rétractée prévue pour ouvrir le passage de soupape, l'armature ferromagnétique (80) incluant une partie distale (86) et un épaulement (81) ;
un flasque (20) s'étendant à partir du logement d'électro-aimant et étant agencé pour coopérer avec ledit épaulement ;
un aimant radial (23) constitué et agencé pour maintenir l'armature fixe, sous l'effet d'un champ magnétique, dans un état fermé quand la partie distale de l'armature est étendue et dans un état ouvert quand la partie distale est rétractée ; et
une pièce polaire (25) couplée au logement d'électro-aimant et agencée avec l'armature ferromagnétique et le logement d'électro-aimant pour constituer un premier trajet de flux magnétique (42) entre les pôles de l'aimant radial, et le logement d'électro-aimant avec le flasque et l'armature comportant l'épaulement constituant un second trajet de flux magnétique (40) entre les pôles de l'aimant radial ;
appliquer un courant d'excitation de bobine à la bobine d'électro-aimant agissant sur l'armature ferromagnétique et provoquer ainsi un déplacement rectiligne de la partie distale par rapport au passage de valve et fermant ainsi le passage de valve ;
maintenir l'armature ferromagnétique en position fixe sous l'effet d'un champ magnétique sur le second trajet de flux magnétique sans application de l'excitation de bobine ; et
régler la position de la pièce polaire par rapport au logement d'électro-aimant par déplacement de la pièce polaire sur une surface filetée, commandant ainsi l'excursion de l'armature et la force sur le premier trajet de flux magnétique et le second trajet de flux magnétique.

20. Procédé selon la revendication 19, incluant un changement du trajet de flux magnétique en dehors de l'armature.

21. Procédé selon la revendication 19, incluant la fourniture d'un signal au circuit de commande à partir d'un capteur externe.

22. Procédé selon la revendication 21, dans lequel le capteur externe comprend un capteur optique.

23. Procédé selon la revendication 21, dans lequel le capteur externe comprend un capteur à ultrasons.

24. Procédé selon la revendication 21, dans lequel le capteur externe comprend un capteur capacitif.

25. Procédé selon la revendication 19, incluant la fourniture de la puissance d'une batterie au circuit de commande.

26. Procédé selon la revendication 19, incluant la fourniture d'un signal au circuit de commande à partir d'un capteur d'actionneur (262) constitué pour détecter un déplacement de l'armature.

27. Procédé selon l'une quelconque des revendications de procédé ci-dessus, dans lequel la soupape est constituée d'un élément de corps pilote (100) et le procédé inclut le remplacement de l'actionneur par un dévissage de l'actionneur par rapport à l'élément de corps pilote.
